# EUROPÄISCHE PATENTSCHRIFT

(11) **EP 3 230 622 B1**
(45) Veröffentlichungstag und Bekanntmachung des Hinweises auf die Patenterteilung: **22.09.2021**
(21) Anmeldenummer: 15791300.5
(22) Anmeldetag: 10.11.2015
(51) Int. Cl.: F16H 1/28

(54) **GELENKIG GELAGERTER PLANETENSCHAFT**
PIVOTALLY MOUNTED PLANET SHAFT
ARBRE DE ROUE PLANÉTAIRE MONTÉ DE FAÇON ARTICULÉE

(30) Priorität: 10.12.2014 DE 102014225417
(43) Veröffentlichungstag der Anmeldung: 18.10.2017
(73) Patentinhaber: ZF Friedrichshafen AG, 88046 Friedrichshafen (DE); ZF Wind Power Antwerpen NV, 3920 Lommel (BE)
(72) Erfinder: SMOOK, Warren, B-3040 Huldenberg (BE)
(74) Vertreter: ZF Friedrichshafen AG
(86) Internationale Anmeldenummer: PCT/EP2015/076114
(87) Internationale Veröffentlichungsnummer: WO 2016/091502

(56) Entgegenhaltungen:
- WO-A1-2005/050058
- DE-A1- 19 706 686
- FR-A- 975 639
- US-A1- 2005 075 211

## Beschreibung

Die Erfindung betrifft eine Planetenstufe nach dem Oberbegriff von Anspruch 1.

Getriebe von Windkraftanlagen weisen in der Regel mindestens eine Planetenstufe auf. Ein vom Wind umströmter Rotor treibt dabei eine Rotorwelle an, die drehfest mit einem Planetenträger verbunden ist. Das auf den Planetenträger wirkende Drehmoment wird mittels Planetenrädern, die drehbar in dem Planetenträger gelagert sind, auf ein Sonnenrad übertragen. Die Planetenräder kämmen dazu mit dem Sonnenrad und einem feststehenden Hohlrad.

Von zentraler Bedeutung bei einem derartigen Getriebe ist die Steifigkeit des Planetenträgers, da Verformungen die Ausrichtung der Planetenräder relativ zu dem Hohlrad und dem Sonnenrad beeinflussen. Eine fehlerhafte Ausrichtung der Planetenräder verschlechtert die Tragbilder der Verzahnungen der Planetenstufe und kann damit durch erhöhten Verschleiß zu einem vorzeitigen Ausfall des Getriebes führen. Allerdings wird die Ausrichtung der Planetenräder durch den Planetenträger festgelegt. Dies stellt hohe Anforderungen an die einzuhaltenden Fertigungstoleranzen. Maßabweichungen können durch die starre Fixierung der Planetenräder nicht ausgeglichen werden.

Auch bei einer steifen Ausgestaltung des Planetenträgers lassen sich geringfügige Verformungen nicht vermeiden. Derartige Verformungen lassen sich kompensieren, indem das Planetengetriebe so ausgelegt wird, dass dessen Komponenten nicht im Ruhezustand, sondern bei Anliegen einer Nennlast und einer damit einhergehenden Verformung korrekt positioniert sind. Kommt es zu Abweichungen von der Nennlast, sind fehlerhafte Positionierungen allerdings weiterhin unvermeidlich.

Die erforderliche steife Auslegung des Planetenträgers erhöht dessen Masse und Bauraumbedarf und führt insbesondere zu steigenden Kosten.

Die Druckschrift DE 197 06 686 A1 offenbart eine Planetenradlagerung für Planetengetriebe. Lagerzapfen sind dabei einseitig - als fliegend bezeichnet - in den axial offenen Planetenträger mittels einer zylindrischen Passung eingesetzt. Zur Übertragung der Relativdrehung zwischen Planetenrad und ruhendem Lagerzapfen ist ein Wälzlager vorgesehen, dessen Tragzentrum mit dem Lastzentrum des Zahneingriffes zusammenfällt. Als Außenlaufbahn für die Wälzkörper wird die zylindrische Bohrung des Planetenrades ausgenutzt. Als innere Laufbahn für die Wälzkörper ist ein Innenlaufring vorgesehen, welcher nur mit einem kurzen zylindrischen Stützabschnitt im Lastzentrum auf dem Stützbund des Lagerzapfens radial gestützt und innerhalb eines kleinen Winkelbereiches kardanisch gegenüber dem Lagerzapfen bewegbar ist. Der Stützbund des Lagerzapfens hat einen kleineren Durchmesser als die zylindrische Zapfeneinpassung am Planetenträger und der Übergang zwischen diesen Lagerzapfenabschnitten ist als Kegelhals ausgeführt. Der Stützbund ist mit einer kleinen Durchmesservergrößerung von diesem Kegelhals abgesetzt ist. Der Innenlaufring weist im Bereich des Stützabschnittes eine wesentlich größere Dicke auf als an seinen Stirnseiten und seine gegenüber dem Lagerzapfen freigestellten Innenflächen sind gegensymmetrisch zum Stützabschnitt hohlkegelförmig ausgebildet mit etwa dem gleichen Kegelwinkel des Kegelhalses.

Der Erfindung liegt die Aufgabe zugrunde, eine Planetenstufe, insbesondere zur Verwendung in einer Strömungskraftanlage, etwa einer Windkraftanlage, unter Umgehung der den aus dem Stand der Technik bekannten Lösungen innewohnenden Nachteile verfügbar zu machen. Insbesondere sollen Fehlpositionierungen von Verzahnungen, die in Folge von durch Belastungen hervorgerufenen Verformungen auftreten können, reduziert oder sogar vermieden werden. Weitere Ziele sind die Reduzierung von Masse, Bauraumbedarf und Kosten.

Diese Aufgabe wird gelöst durch eine Planetenstufe nach Anspruch 1. Bevorzugte Weiterbildungen sind in den Unteransprüchen angegeben.

Unter einer Planetenstufe ist eine Getriebestufe mit mindestens einem Planetenrad, einem Planetenträger, mindestens einem Hohlrad und mindestens einem Sonnenrad zu verstehen. Die Planetenräder sind drehbar in dem Planetenträger gelagert und kämmen mit dem Hohlrad und/oder dem Sonnenrad. Zur Übertragung einer Drehbewegung dienen in der Regel der Planetenträger, das Hohlrad und das Sonnenrad. Es sind Ausführungsformen mit feststehendem Hohlrad, drehbarem Planetenträger und drehbarem Sonnenrad, mit drehbarem Hohlrad, feststehendem Planetenträger und drehbarem Sonnenrad und mit drehbarem Hohlrad, drehbarem Planetenträger und feststehendem Sonnenrad denkbar. Dabei realisiert die Planetenstufe einen Getriebefreiheitsgrad von zwei. Durch das feststehende Hohlrad, den feststehenden Planetenträger oder das feststehende Sonnenrad verbleibt ein Getriebefreiheitsgrad von eins.

Eine allgemeine Definition des Begriffs Getriebefreiheitsgrad, auch Getriebelaufgrad genannt, findet sich im "Dubbel" (Karl Heinrich Grote, Jörg Feldhusen: "Dubbel", 22. Auflage, 2007). (Getriebefreiheitsgrad von zwei durch Getriebefreiheitsgrad von eins ersetzen) Bei einem Getriebefreiheitsgrad von eins sind in Abhängigkeit von einer beliebig gewählten Drehzahl einer Getriebekomponente die Drehzahlen der übrigen Getriebekomponenten eindeutig bestimmt.

Unter einer Getriebestufe ist ein Bereich eines Getriebes zu verstehen. Dabei stehen jeweils zwei der zu der Getriebestufe gehörigen Getriebekomponenten - direkt oder über weitere zu der Getriebestufe gehörige Getriebekomponenten - derart miteinander in Wirkverbindung, dass ein Axial, das heißt entlang einer Drehachse der jeweiligen Getriebekomponente ausgerichtetes Drehmoment, übertragen werden kann.

Die erfindungsgemäße Planetenstufe weist neben mindestens einem Planetenrad mindestens einen Planetenschaft auf. Bei dem Planetenschaft handelt es sich um eine Achse zur Lagerung des Planetenrads. Das Planetenrad ist also drehbar in dem Planetenschaft gelagert. Insbesondere ist das Planetenrad relativ zu dem Planetenträger drehbar. Die Richtung der Drehung definiert eine Drehachse. Vorzugsweise ist das Planetenrad in dem Planetenschaft ohne translatorischen Freiheitsgrad und mit genau einem rotatorischen Freiheitsgrad gelagert.

Erfindungsgemäß ist der Planetenschaft gelenkig in dem Planetenträger gelagert. Der Planetenschaft ist also nicht - wie aus dem Stand der Technik bekannt - starr in dem Planetenträger fixiert, sondern kann orthogonal zu der Drehachse gegenüber dem Planetenträger verkippt werden. Eine Verkippung des Planetenschafts ist gleichbedeutend mit einer Verdrehung des Planetenschafts. Die Verdrehbarkeit kann dabei auf einen bestimmten maximalen Kippwinkel beschränkt sein kann.

Die Planetenstufe ist bevorzugt derart weitergebildet, dass der Kippwinkel des Planetenschafts, das heißt der Winkel, um den der Planetenschaft ausgehend von einer Normalposition orthogonal zu der Drehachse verkippt werden kann, beträgt mindestens 10°, mindestens 5°, mindestens 3°, mindestens 2°, mindestens 1°, mindestens 0,5°, mindestens 0,25°, mindestens 0,15°, mindestens 0,1°, mindestens 0,05° oder mindestens 0,01° beträgt. Dabei bezeichnet die Normalposition des Planetenschafts eine Position, in welcher der Planetenschaft nicht verkippt ist, in der also der Planetenschaft koaxial zu der Drehachse ausgerichtet ist. Koaxial bedeutet in diesem Fall, dass eine Symmetrieachse, bezüglich welcher der Planetenschaft rotationssymmetrisch ist, mit der Drehachse übereinstimmt. Vorzugseise nimmt der Planetenschaft die Normalposition ein, wenn die Planetenstufe lastfrei ist.

Der Planetenschaft kann um mindestens eine Achse orthogonal zu der Drehachse verkippt werden. Vorzugsweise ist der Planetenschaft um jede orthogonal zu der Drehachse verlaufende Achse verkippbar.

Durch eine Verkippung des Planetenschafts ist es möglich, das Planetenrad relativ zu einem Sonnenrad, mit dem das Planetenrad kämmt und/oder zu einem Hohlrad, mit dem das Planetenrad kämmt, auszurichten. Das Planetenrad richtet sich dabei selbsttätig so aus, dass die in den kämmenden Verzahnungen wirkenden Belastungen minimiert werden. Hierdurch entfällt die Notwendigkeit, den Planetenträger möglichst steif auszugestalten. Stattdessen sind Verformungen des Planetenträgers tolerierbar, da diese durch das verkippbare Planetenrad ausgeglichen werden können. In einer bevorzugten Weiterbildung weist die Planetenstufe Planetenräder auf, die paarweise auf dem Planetenschaft drehbar gelagert sind. Mindestens zwei Planetenräder sind demnach um die Drehachse drehbar in demselben Planetenschaft gelagert. Die Planetenstufe kann dabei genau ein Sonnenrad, genau ein Hohlrad, genau zwei Sonnenräder und/oder genau zwei Hohlräder aufweisen. Im Falle zweier Sonnenräder kämmt ein erstes der zwei Planetenräder mit einem ersten der zwei Sonnenräder und ein zweites der zwei Planetenräder mit einem zweiten der zwei Sonnenräder. Im Falle zweier Hohlräder kämmt entsprechend das erste der zwei Planetenräder mit einem ersten der zwei Hohlräder und das zweite der zwei Planetenräder mit einem zweiten der zwei Hohlräder.

Durch die zwei Planetenräder ergibt sich eine verbesserte Statik des verkippbaren Planetenschafts. Die in den Verzahnungen wirkenden Belastungen werden so weiter minimiert.

In einer darüber hinaus bevorzugten Weiterbildung sind der Planetenträger und der Planetenschaft zweistückig miteinander verbunden, das heißt eine aus dem Planetenträger und dem Planetenschaft bestehende Komponente ist zweistückig ausgebildet, mit dem Planetenträger als ein erstes Stück und dem Planetenschaft als ein zweites Stück. Durch die zweistückige Weiterbildung lässt sich der Planetenschaft auf besonders einfache Weise verkippbar in dem Planetenträger fixieren.

Von Vorteil ist eine zweistückige Weiterbildung darüber hinaus, wenn Doppelschrägverzahnungen zum Einsatz kommen. Herkömmliche doppelschrägverzahnte Planetenstufen erfordern ein zweistückig ausgeführtes Hohlrad, um einen Zusammenbau der Planetenstufe zu ermöglichen. Weiterbildungsgemäß hingegen ist es möglich, ein einstückig ausgeführtes doppelschrägverzahntes Hohlrad sowie ein einstückig ausgeführtes doppelschrägverzahntes Sonnenrad zu verwenden. Zur Montage werden zunächst das Hohlrad, der Planetenschaft und das Sonnenrad positioniert, bevor die Planetenräder auf den Planetenschaft aufgeschoben werden, so dass die Planetenräder mit dem Hohlrad und dem Sonnenrad kämmen. Anschließend erfolgt die Montage des Planetenträgers. In diesem Schritt wird der Planetenschaft mit dem Planetenträger verfügt, so dass der Planetenschaft verkippbar in dem Planetenträger fixiert ist.

Um den Planetenschaft verkippbar zu lagern, weist der Planetenträger in einer darüber hinaus bevorzugten Weiterbildung mindestens einen tonnenförmigen Bereich auf, der ein Lager bildet, in dem der Planetenschaft fixiert ist. Bei dem tonnenförmigen Bereich handelt es sich um einen Rotationskörper, der durch Rotation einer konkaven Kurve um die Drehachse gebildet wird. Die Kurve verläuft also bezüglich der Drehachse oberhalb jeder Verbindungsstrecke zweier ihrer Punkte. Die Kurve verläuft also in Richtung der Drehachse gekrümmt. Bei der Kurve kann es sich beispielsweise um einen Kreisbogen handeln. Entsprechend ist der Rotationskörper dann als eine Kugelschicht ausgebildet.

Vorzugsweise ist der Rotationskörper spiegelsymmetrisch zu einer orthogonal zu der Drehachse verlaufenden Ebene. Dies ist gleichbedeutend damit, dass die oben genannte Kurve spiegelsymmetrisch zu dieser Ebene verläuft.

Besonders bevorzugt wird ein tonnenförmiges Lager, das so geformt ist, dass der Planetenschaft beim Verkippen in dem Lager beziehungsweise auf einer Lagerfläche abrollt. Dies vermindert die zwischen dem Planetenschaft und dem Lager entstehende Reibung. In Folge dessen verringert sich der Verschleiß, woraus wiederum eine verbesserte Haltbarkeit resultiert.

In einer bevorzugten Weiterbildung weist der Planetenträger mindestens eine Wange und mindestens einen Achszapfen auf. Insbesondere kann der Planetenträger genau eine Wange aufweisen. Der Achszapfen fixiert dabei das Lager gegenüber der Wange. Dazu verläuft der Achszapfen zwischen der Wange und dem Lager und verbindet so das Lager mit der Wange.

Die Wange dient dazu, den Achszapfen zu führen und ein Drehmoment von einem in einem strömenden Fluid befindlichen und von dem strömenden Fluid angetriebenen Rotor auf den Achszapfen zu übertragen. Entsprechend ist der fen - einstückig oder zweistückig - in der Wange fixiert. Der Achszapfen und das Lager wiederum sind bevorzugt einstückig miteinander fixiert, das heißt eine einstückig ausgeführte Komponente des Planetenträgers bildet sowohl den Achszapfen als auch das Lager aus.

In einer darüber hinaus bevorzugten Weiterbildung ist der Planetenschaft hohl, weist also einen Hohlraum auf. Unter einem Hohlraum ist die Menge aller Punkte zu verstehen, die auf einer Verbindungslinie zwischen zwei Punkten eines Körpers - hier: des Planetenschafts - liegen, wobei die Punkte des Hohlraums nicht zu dem Körper gehören.

Der erfindungsgemäße Planetenschaft ist mindestens in radialer Richtung, das heißt orthogonal zu der Drehachse, vorzugsweise in jede Richtung orthogonal zu der Drehachse, gegenüber dem Planetenschaft fixiert. Hierbei handelt es sich mindestens um eine formschlüssige Verbindung. Der Planetenschaft ist also in radialer Richtung mindestens formschlüssig in dem Planetenträger fixiert. Dies bedeutet, dass der Planetenschaft in radialer Richtung mittels eines Formschlusses in dem Planetenträger positioniert wird.

Darüber hinaus kann der Planetenschaft gegenüber dem Planetenträger in axialer Richtung, das heißt in Richtung der Drehachse, fixiert sein. Vorzugsweise ist der Planetenschaft auch in axialer Richtung mindestens formschlüssig in dem Planetenträger fixiert, d.h. der Planetenschaft wird in axialer Richtung mittels eines Formschlusses in dem Planetenträger positioniert.

Während die Fixierung des Planetenschafts in dem Planetenträger in radialer Richtung vorzugsweise durch das tonnenförmige Lager zustande kommt, weist der Planetenschaft in einer bevorzugten Weiterbildung zur axialen Fixierung in dem Planetenträger eine erste Schulter und eine zweite Schulter auf. Die erste Schulter des Planetenschafts kann sich gegen eine entsprechende Schulter des Planetenträgers in eine erste axiale Richtung abstützen. Hierdurch wird der Planetenschaft gegenüber dem Planetenträger in die erste axiale Richtung fixiert. Die zweite Schulter des Planetenschafts kann sich in eine zweite, entgegengesetzt zu der ersten axialen Richtung verlaufende axiale Richtung gegen einen Sicherungsring abstützen. Dieser ist in eine Nut des Planetenträgers eingebracht. Entsprechend kann sich der Sicherungsring in die zweite axiale Richtung gegen die Nut abstützen. Somit wird der Planetenschaft gegenüber dem Planetenträger in die zweite axiale Richtung fixiert.

Die erste axiale Richtung und die zweite axiale Richtung verlaufen parallel zu der Drehachse und entgegengesetzt zueinander.

In einer weiterhin bevorzugten Ausführungsform ist der Planetenschaft bezüglich der Drehachse drehfest in dem Planetenträger fixiert. Diese Fixierung erfolgt bevorzugt formschlüssig, etwa mittels eines unrunden Querschnitts des tonnenförmigen Bereichs und eines entsprechend ausgeformten Planetenschafts oder mittels einer axial verlaufenden Nut in dem tonnenförmigen Bereich oder in dem Planetenschaft. Der Planetenschaft hat dann genau zwei rotatorische Freiheitsgrade - die Verkippbarkeit orthogonal zur Drehachse des Planetenrads.

Bevorzugte Ausführungsbeispiele der Erfindung sind in den Figuren dargestellt. Übereinstimmende Bezugszeichen kennzeichnen dabei gleiche oder funktionsgleiche Merkmale. Im Einzelnen zeigt:
- Fig. 1: eine Planetenstufe mit gelenkig gelagerten Planetenschäften;
- Fig. 2a: einen gelenkig gelagerten Planetenschaft in Ruheposition;
- Fig. 2b: einen gelenkig gelagerten Planetenschaft unter Belastung; und
- Fig. 3: die Montage der Planetenstufe.

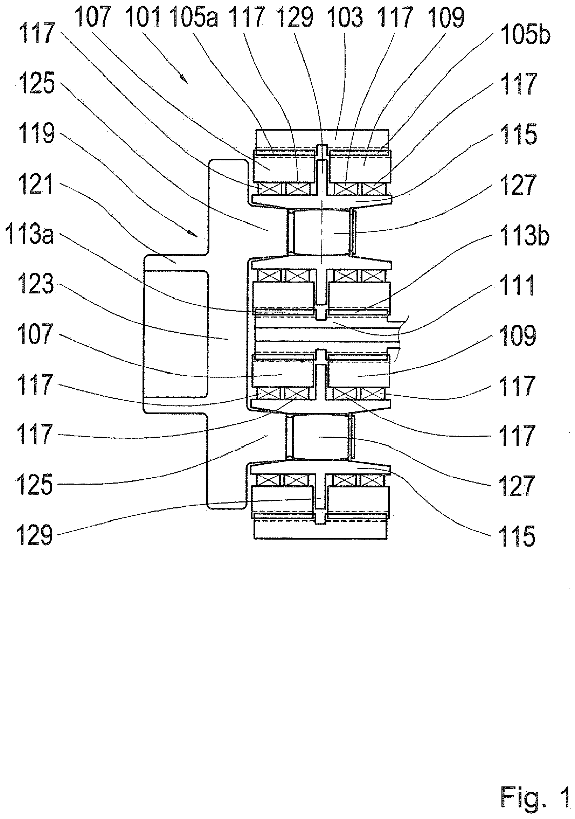

Eine Planetenstufe 101 gemäß Fig. 1 weist ein Hohlrad 103 mit einer ersten Verzahnung 105a und einer zweiten Verzahnung 105b auf. Die erste Verzahnung 105a kämmt mit einem ersten Planetenrad 107. Entsprechend kämmt die zweite Verzahnung 105b mit einem zweiten Planetenrad 109.

Ebenso wie das Hohlrad 103 weist ein Sonnenrad 111 zwei Verzahnungen - eine erste Verzahnung 113a und eine zweite Verzahnung 113b auf. Mit der ersten Verzahnung 113a kämmt das erste Planetenrad 107. Das zweite Planetenrad 109 kämmt mit der zweiten Verzahnung 113b.

Das erste Planetenrad 107 und das zweite Planetenrad 109 verlaufen um einen gemeinsamen Planetenschaft 115. Mittels jeweils zweier Lager 117 sind das erste Planetenrad 107 und das zweite Planetenrad 109 drehbar in dem Planetenschaft 115 gelagert.

Der Planetenschaft 115 bildet zusammen mit einem Grundkörper, bestehend aus einem Anschlussstück 121 für einen Rotor oder eine Rotorwelle, einer Wange 123 und dem Achszapfen 125 einen Planetenträger 119. Der Achszapfen 125 weist einen tonnenförmigen Abschnitt 127 auf, in dem der Planetenschaft 115 verkippbar gelagert ist. Die Krümmung des tonnenförmigen Abschnitts 127 ist in Fig. 1 und in den übrigen Figuren überzeichnet dargestellt, um die Funktionsweise der Anordnung zu verdeutlichen. Unter technischen Gesichtspunkten hingegen wäre ein Krümmungsradius von mehr als fünfzehn Metern zu bevorzugen.

Das Anschlussstück 121, die Wange 123 und der Achszapfen 125 sind einstückig miteinander verbunden.

Der Planetenschaft 115 ist mit einer ringförmigen Verstärkung 129 versehen. Die Verstärkung 129 erstreckt sich radial nach außen in einen Spalt zwischen dem ersten Planetenrad 107 und dem zweiten Planetenrad 109.

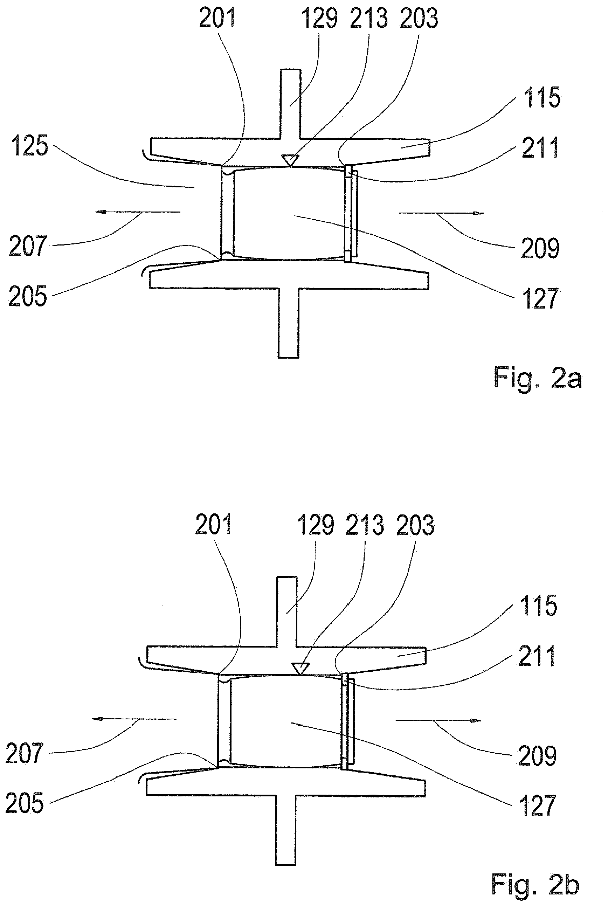

Die Fig. 2a und 2b verdeutlichen den Aufbau und die Funktionsweise der Lagerung des Planetenschafts 115 in dem tonnenförmigen Abschnitt 127 des Achszapfens 125. Um eine axiale Fixierung des Planetenschafts 115 in dem Achszapfen 125 zu gewährleisten, bildet der Planetenschaft 115 eine erste Schulter 201 und eine zweite Schulter 203 aus. Eine weitere Schulter 205 befindet sich in dem Achszapfen 125.

Die erste Schulter 201 des Planetenschafts 115 stützt sich in eine erste Richtung 207 gegen die Schulter 205 des Achszapfens 125 ab. In eine zweite, entgegengesetzt zu der ersten Richtung 207 verlaufende Richtung 209 stützt sich der Planetenschaft 115 mit seiner zweiten Schulter 203 gegen einen Sicherungsring 211 ab. Der Sicherungsring 211 ist mittels einer Nut auf dem Achszapfen 125 fixiert.

Fig. 2a stellt eine Ruheposition, das heißt eine Position, in der keine Kräfte auf den Planetenschaft 115 und den Achszapfen 125 wirken, dar. Eine Kontaktstelle 213, zwischen dem tonnenförmigen Abschnitt 127 des Achszapfens 125 und dem Planetenschaft 115 ist daher in axialer Richtung bezüglich des tonnenförmigen Abschnitts 127 und des Planetenschafts 115 mittig lokalisiert.

Unter Belastung verbiegt sich der Achszapfen 125. Dies veranschaulicht Fig. 2b. Der Planetenschaft 115 hingegen wird durch die mit dem Hohlrad 103 und dem Sonnenrad 111 kämmenden Planetenräder 107, 109 in Position gehalten. Dies führt dazu, dass der Planetenschaft 115 mit seiner Innenfläche auf dem tonnenförmigen Abschnitt 127 abrollt. Entsprechend verschiebt sich die Kontaktstelle 213 in axialer Richtung. Der Planetenschaft 115 wird so von der Verbiegung des Achszapfens 125 entkoppelt.

Um ein Abrollen des Planetenschafts 115 zu ermöglichen, besteht zwischen dem Planetenschaft 115 und dem tonnenförmigen Abschnitt 127 genau eine Kontaktstelle 213, die insbesondere nicht umlaufend ist. Dies lässt sich erreichen durch ein geringes Radialspiel zwischen dem Planetenschaft 115 und dem tonnenförmigen Abschnitt 127. Würde der Planetenschaft 115 mit dem tonnenförmigen Abschnitt 127 an mehreren Stellen oder entlang einer tangential umlaufenden Fläche in Kontakt kommen, würde der Planetenschaft 115 nicht mehr an dem tonnenförmigen Abschnitt 127 abrollen können, sondern würde auf der Oberfläche des tonnenförmigen Abschnitts 127 gleiten.

Die Verstärkung 129 dient dazu, die Steifigkeit des Planetenschafts 115 in radialer Richtung zu verbessern. Bei einer Belastung des Achszapfens 125, die durch eine rotatorische Verspannung des Planetenträgers 119 gegen das Hohlrad 103 zustande kommen kann, würde ansonsten der Planetenschaft 115 in dem Kontaktbereich 213 deformiert werden. Dies würde verhindern, dass der Planetenschaft 115 an dem tonnenförmigen Bereich 127 abrollen kann. Durch die um den Kontaktbereich 213 herumlaufende Verstärkung 129 wird eine solche Deformierung des Planetenschafts 115 minimiert.

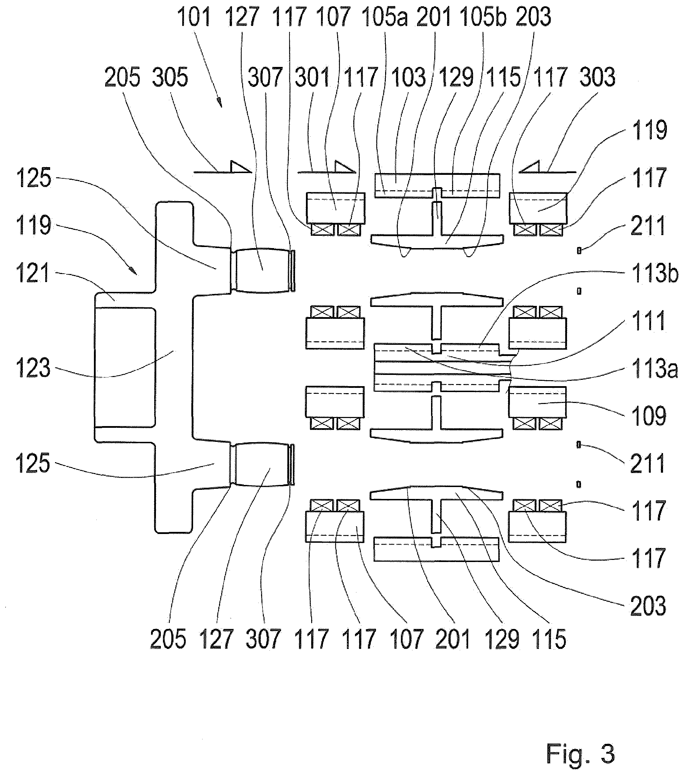

Ein Verfahren zur Montage der Planetenstufe 101 ist in Fig. 3 dargestellt. In einem ersten Schritt 301 wird das erste Planetenrad 107 mit den zugehörigen Lagern 117 auf den Planetenschaft 115 aufgesetzt. Entsprechend wird in einem zweiten Schritt 303 das zweite Planetenrad 119 zusammen mit den zugehörigen Lagern 117 auf den Planetenschaft 115 aufgesetzt. Dabei ist die Reihenfolge des ersten Schritts 301 und des zweiten Schritts 303 beliebig wählbar. So kann der erste Schritt 301 vor dem zweiten Schritt 303 ausgeführt werden oder der zweite Schritt 303 vor dem ersten Schritt 301.

Der erste Schritt 301 und der zweite Schritt 303 erfordern eine geeignete Positionierung des Hohlrads 103. Das Hohlrad 103 kann bezüglich des Planetenschafts 115 mittig positioniert werden, so dass das erste Planetenrad 107 in dem ersten Schritt 301 und das zweite Planetenrad 109 in dem zweiten Schritt 303 in den zwischen dem Planetenschaft 115 und dem Hohlrad 103 bestehenden Raum eingebracht werden. Alternativ wird zunächst das erste Planetenrad in dem ersten Schritt 301 auf den Planetenschaft 115 aufgesetzt. Bevor der zweite Schritt 303 ausgeführt wird, erfolgt in diesem Fall die Montage des Hohlrads 103. Dazu wird das erste Planetenrad 107 zusammen mit dem Planetenschaft 115 in das Hohlrad 103 eingeführt, bevor in dem zweiten Schritt 303 das zweite Planetenrad 109 eingesetzt wird.

In einem dritten Schritt 305 wird der Planetenträger 119 montiert. Dazu werden die tonnenförmigen Bereiche 127 in die Planetenschäfte 115 eingeführt. Die Fixierung der Planetenschäfte 115 auf den Achszapfen 125 erfolgt schließlich mittels der Sicherungsringe 211, die in jeweils eine Nut 307 der Achszapfen 125 eingesetzt werden.

### Bezugszeichen

- 101: Planetenstufe
- 103: Hohlrad
- 105a: erste Verzahnung des Hohlrads
- 105b: zweite Verzahnung des Hohlrads
- 107: erstes Planetenrad
- 109: zweites Planetenrad
- 111: Sonnenrad
- 113a: erste Verzahnung des Sonnenrads
- 113b: zweite Verzahnung des Sonnenrads
- 115: Planetenschaft
- 117: Lager
- 119: Planetenträger
- 121: Anschlussstück
- 123: Wange
- 125: Achszapfen
- 127: tonnenförmiger Abschnitt
- 129: Verstärkung
- 201: erste Schulter
- 203: zweite Schulter
- 205: Schulter des Planetenträgers
- 207: erste Richtung
- 209: zweite Richtung
- 211: Sicherungsring
- 213: Kontaktstelle
- 301: erster Schritt
- 303: zweiter Schritt
- 305: dritter Schritt
- 307: Nut

## Patentansprüche

1. Planetenstufe (101) mit einem Planetenträger (119), mindestens einem Planetenrad (107, 109) und mindestens einem Planetenschaft (115); wobei das mindestens eine Planetenrad (107, 109) um eine Drehachse drehbar in dem mindestens einen Planetenschaft (115) gelagert ist; wobei der mindestens eine Planetenschaft (115) derart in dem Planetenträger (119) fixiert ist, dass der mindestens eine Planetenschaft (115) orthogonal zu der Drehachse des mindestens einen Planetenrads (107, 109) gegenüber mindestens einem Teil des Planetenträgers (119) verkippt werden kann; wobei der mindestens eine Planetenschaft (115) formschlüssig in dem Planetenträger (119) fixiert ist; **dadurch gekennzeichnet, dass** der mindestens eine Planetenschaft (115) eine erste Schulter (201) und eine zweite Schulter (203) aufweist; wobei der Planetenträger (119) eine Schulter (205) und eine Nut (307) aufweist; wobei ein Sicherungsring (211) in die Nut (307) eingebracht ist; wobei die erste Schulter (201) des mindestens einen Planetenschafts (115) sich gegen die Schulter (205) des Planetenträgers (119) abstützt, sodass der mindestens eine Planetenschaft (115) gegenüber dem Planetenträger (119) in eine erste axiale Richtung fixiert wird; und wobei die zweite Schulter (203) des mindestens einen Planetenschafts (115) sich gegen den Sicherungsring (211) abstützt, sodass der mindestens eine Planetenschaft (115) gegenüber dem Planetenträger (119) in eine zweite axiale Richtung fixiert wird.

2. Planetenstufe (101) nach Anspruch 1; **gekennzeichnet durch**
mindestens zwei Planetenräder (107, 109); wobei
die mindestens zwei Planetenräder (107, 109) um die Drehachse drehbar in dem mindestens einen Planetenschaft (115) gelagert sind.

3. Planetenstufe (101) nach einem der vorhergehenden Ansprüche; **dadurch gekennzeichnet, dass**
der Planetenträger (119) und der mindestens eine Planetenschaft (115) zweistückig miteinander verbunden sind.

4. Planetenstufe (101) nach einem der vorhergehenden Ansprüche; **dadurch gekennzeichnet, dass**
der Planetenträger (119) mindestens ein tonnenförmiges Lager (117) aufweist; wobei der mindestens eine Planetenschaft (115) in dem Lager (117) fixiert ist.

5. Planetenstufe (101) nach Anspruch 4; **dadurch gekennzeichnet, dass** der Planetenträger (119) mindestens eine Wange (123) und mindestens einen Achszapfen (125) aufweist; wobei der Achszapfen (125) das mindestens eine Lager (117) mit der Wange (123) verbindet.

6. Planetenstufe (101) nach einem der vorhergehenden Ansprüche; **dadurch gekennzeichnet, dass**
der mindestens eine Planetenschaft (115) hohl ist.

7. Planetenstufe (101) nach einem der vorhergehenden Ansprüche; **dadurch gekennzeichnet, dass**
der mindestens eine Planetenschaft (115) bezüglich der Drehachse drehfest in dem Planetenträger (119) fixiert ist.

## Claims

1. Planetary stage (101) with a planetary carrier (119), at least one planetary gear (107, 109) and at least one planetary shaft (115); the at least one planetary gear (107, 109) being mounted in the at least one planetary shaft (115) such that it can be rotated about a rotational axis; the at least one planetary shaft (115) being fixed in the planetary carrier (119) in such a way that the at least one planetary shaft (115) can be tilted with regard to at least one part of the planetary carrier (119) orthogonally with respect to the rotational axis of the at least one planetary gear (107, 109); the at least one planetary shaft (115) being fixed in a positively locking manner in the planetary carrier (119); **characterized in that** the at least one planetary shaft (115) has a first shoulder (201) and a second shoulder (203); the planetary carrier (119) having a shoulder (205) and a groove (307); a securing ring (211) being introduced into the groove (307); the first shoulder (201) of the at least one planetary shaft (115) being supported against the shoulder (205) of the planetary carrier (119), with the result that the at least one planetary shaft (115) is fixed in a first axial direction with respect to the planetary carrier (119); and the second shoulder (203) of the at least one planetary shaft (115) being supported against the securing ring (211), with the result that the at least one planetary shaft (115) is fixed in a second axial direction with respect to the planetary carrier (119).

2. Planetary stage (101) according to Claim 1, **characterized by** at least two planetary gears (107, 109); the at least two planetary gears (107, 109) being mounted in the at least one planetary shaft (115) such that they can be rotated about the rotational axis.

3. Planetary stage (101) according to either of the preceding claims, **characterized in that** the planetary carrier (119) and the at least one planetary shaft (115) are connected to one another in two pieces.

4. Planetary stage (101) according to one of the preceding claims, **characterized in that** the planetary carrier (119) has at least one barrel-shaped bearing (117); the at least one planetary shaft (115) being fixed in the bearing (117).

5. Planetary stage (101) according to Claim 4, **characterized in that** the planetary carrier (119) has at least one cheek (123) and at least one axle journal (125); the axle journal (125) connecting the at least one bearing (117) to the cheek (123).

6. Planetary stage (101) according to one of the preceding claims, **characterized in that** the at least one planetary shaft (115) is hollow.

7. Planetary stage (101) according to one of the preceding claims, **characterized in that** the at least one planetary shaft (115) is fixed in the planetary carrier (119) such that it cannot be rotated with regard to the rotational axis.

## Revendications

1. Étage planétaire (101) comprenant un porte-satellites (119), au moins un pignon planétaire (107, 109) et au moins un arbre de pignon planétaire (115) ;
l'au moins un pignon planétaire (107, 109) étant logé dans l'au moins un arbre de pignon planétaire (115) de manière rotative autour d'un axe de rotation ;
l'au moins un arbre de pignon planétaire (115) étant calé dans le porte-satellites (119) de telle sorte que l'au moins un arbre de pignon planétaire (115) peut être basculé orthogonalement à l'axe de rotation de l'au moins un pignon planétaire (107, 109) par rapport à au moins une partie du porte-satellites (119) ;
l'au moins un arbre de pignon planétaire (115) étant calé dans le porte-satellites (119) par complémentarité de formes ;
**caractérisé en ce que**
l'au moins un arbre de pignon planétaire (115) possède un premier épaulement (201) et un deuxième épaulement (203) ; le porte-satellites (119) possédant un épaulement (205) et une rainure (307) ; une bague de retenue (211) étant introduite dans la rainure (307) ; le premier épaulement (201) de l'au moins un arbre de pignon planétaire (115) prenant appui contre l'épaulement (205) du porte-satellites (119), de sorte que l'au moins un arbre de pignon planétaire (115) est calé dans une première direction axiale par rapport au porte-satellites (119) ; et le deuxième épaulement (203) de l'au moins un arbre de pignon planétaire (115) prenant appui contre la bague de retenue (211), de sorte que l'au moins un arbre de pignon planétaire (115) est calé dans une deuxième direction axiale par rapport au porte-satellites (119).

2. Étage planétaire (101) selon la revendication 1, **caractérisé par** au moins deux pignons planétaires (107, 109) ; les au moins deux pignons planétaires (107, 109) étant logés dans l'au moins un arbre de pignon planétaire (115) de manière rotative autour de l'axe de rotation.

3. Étage planétaire (101) selon l'une des revendications précédentes, **caractérisé en ce que** le porte-satellites (119) et l'au moins un arbre de pignon planétaire (115) sont reliés l'un à l'autre en deux parties.

4. Étage planétaire (101) selon l'une des revendications précédentes, **caractérisé en ce que** le porte-satellites (119) possède au moins un palier (117) en forme de barillet ; l'au moins un arbre de pignon planétaire (115) étant calé dans le palier (117).

5. Étage planétaire (101) selon la revendication 4, **caractérisé en ce que** le porte-satellites (119) possède au moins une joue (123) et au moins un tourillon (125) ; le tourillon (125) reliant l'au moins un palier (117) à la joue (123).

6. Étage planétaire (101) selon l'une des revendications précédentes, **caractérisé en ce que** l'au moins un arbre de pignon planétaire (115) est creux.

7. Étage planétaire (101) selon l'une des revendications précédentes, **caractérisé en ce que** l'au moins un arbre de pignon planétaire (115) est calé dans le porte-satellites (119) solidaire en rotation par rapport à l'axe de rotation.
